# EUROPÄISCHE PATENTSCHRIFT

(11) **EP 2 998 086 B1**
(45) Veröffentlichungstag und Bekanntmachung des Hinweises auf die Patenterteilung: **21.06.2017**
(21) Anmeldenummer: 15185471.8
(22) Anmeldetag: 16.09.2015
(51) Int. Cl.: B26D 7/06, B26D 7/27, B26D 7/30, F21V 33/00, B26D 5/00

(54) **VORRICHTUNG ZUM AUFSCHNEIDEN VON LEBENSMITTELPRODUKTEN**
DEVICE FOR CUTTING FOOD PRODUCTS
DISPOSITIF DE DECOUPAGE DE PRODUITS ALIMENTAIRES

(30) Priorität: 17.09.2014 DE 102014113424
(43) Veröffentlichungstag der Anmeldung: 23.03.2016
(60) Teilanmeldung: 17165485.8
(73) Patentinhaber: Weber Maschinenbau GmbH Breidenbach, 35236 Breidenbach (DE)
(72) Erfinder: Köster, Bernd, 38162 Abbenrock (DE); Stremel, Jörg, 57334 Bad Laasphe (DE); Burk, Alexander, 35232 Dautphetal (DE)
(74) Vertreter: Manitz Finsterwald Patentanwälte PartmbB

(56) Entgegenhaltungen:
- WO-A1-03/004228
- WO-A1-2007/148041
- DE-A1- 10 136 809
- DE-A1- 10 147 617
- US-A1- 2004 200 365

## Beschreibung

Die Erfindung betrifft eine Vorrichtung zum Aufschneiden von Lebensmittelprodukten, insbesondere Hochleistungsslicer, mit einer eine Zuführebene definierenden Produktzuführung, mittels welcher die Produkte entlang der Zuführebene in einer Zuführrichtung einer in einem Aufschneidebereich gelegenen Schneidebene zugeführt werden, in der sich ein Schneidmesser insbesondere rotierend und/oder umlaufend bewegt, das zum Abtrennen von Scheiben von den Produkten mit einer, insbesondere sich parallel zur Zuführebene und senkrecht zur Zuführrichtung erstreckenden, Schneidkante zusammenwirkt.

Derartige Vorrichtungen sind allgemein bekannt. Dabei werden mit solchen Vorrichtungen häufig auch sogenannte optische Waagen eingesetzt, die zumindest eine vor dem Schneidschacht angebrachte Kamera umfassen, die die von vorne sichtbare Querschnittsfläche eines Produktes im Produktschacht erfasst. Der Produktquerschnitt erscheint hell und die Umgebung bzw. Hohlräume im Produkt dunkel. Ein guter Kontrast ist dabei wesentlich für die Erfassungsqualität. Mit der Auswertung der Bilder wird ein Signal an die Slicer-Steuerung generiert. Somit können beispielsweise die Einteilung der Scheibenanzahl und der Scheibendicke entsprechend der erkannten Löcher in einem Käselaib vorgenommen bzw. nachgeregelt werden, um das gewünschte Gewicht einer Portion zu erreichen. Es wird somit ein Bild der Stirnseite des Produktes erzeugt, und zwar in einem engen Zeitfenster, in dem die Schnittfläche vollständig frei sichtbar ist. Dabei handelt es sich um den Zeitpunkt, zu dem das Schneidmesser sich gerade noch außerhalb der Schneidfläche befindet und die zuvor abgeschnittene Scheibe vollständig abgelegt ist. Um Totalreflexionen wie zum Beispiel weiße Flecken zu vermeiden, was eine Bildauswertung verhindern würde, hat man bisher vermieden, die Produktquerschnittsfläche von der Stirnseite her auszuleuchten.

Es wurde auch bereits vorgeschlagen, mittels einer in der optischen Waage eingesetzten Lampe möglichst den gesamten Bereich der Schnittfläche von unten mit Streiflicht zu beleuchten. Die dazu vorgesehene Anbauposition der Lampe verursacht im Betrieb allerdings häufig anwendungstechnische Probleme und Nachteile. So ist für einen gesicherten Lichtdurchtritt von unten her ein gewisser Spalt zwischen Portionierband und Schneidkante erforderlich, wozu das Portionierband relativ tief angeordnet werden muss. Dies bringt nun aber eine relativ große Fallhöhe der Produktscheiben mit sich, was für das Ablegen unvorteilhaft ist. Zudem muss bei einer Beleuchtung von unten der Schattenwurf der fallenden Scheiben beachtet werden, da dieser einen wesentlichen Einfluss auf das zur Verfügung stehende Zeitfenster für eine Aufnahme hat. Weiterhin kann es im Streiflicht zu einem Schattenwurf durch eine sogenannte Bartbildung an der Unterseite des Produktes, also im Bereich der Anlage an der Schneidkante, kommen. Dabei fällt ein Schatten in die darüber liegenden Flächenbereiche, was die Auswertung erheblich erschweren kann.

In der WO 2007/148041 A1, die die Grundlage für den Oberbegriff des Anspruchs 1 bildet, ist eine Vorrichtung zum Aufschneiden von Lebensmittelprodukten beschrieben, die mit einer eine Zuführebene definierenden Produktzuführung versehen ist, mittels der die Produkte entlang der Zuführebene in einer Zuführrichtung einer in einem Aufschneidebereich gelegenen Schneideebene zugeführt werden, in der sich ein Schneidmesser insbesondere rotierend und/oder umlaufend bewegt, das zum Abtrennen von Scheiben von den Produkten mit einer sich parallel zur Zuführebene und senkrecht zur Zuführrichtung erstreckenden Schneidkante zusammenwirkt. Diese bekannte Vorrichtung umfasst zudem auch bereits eine Nachweiseinrichtung für aus dem Aufschneidebereich reflektierte Strahlung, eine Auswerteeinrichtung zum Auswerten der nachgewiesenen Strahlung und eine Beleuchtungseinrichtung zum Ausleuchten des Aufschneidebereichs in dem vor dem Aufschneidebereich gelegenen Halbraum. Dabei umfasst die Beleuchtungseinrichtung zwei in einem Gehäuse angeordnete Laser, deren beide jeweils strukturierten Lichtstrahlen durch zwei in einem Abstand voneinander angeordnete Gehäuseöffnungen hindurchgeführt sind und sich anschließend so aufweiten, dass sie jeweils eine Hälfte der Produktstirnseite beleuchten. Die Lichtstrahlen der Laser sind so strukturiert, dass sich eine Vielzahl von parallelen Linien über das Sichtfeld ergibt. Die voneinander beabstandeten parallelen Linien dieses Lichtes werden von der Seite der Produktzuführung in einem Winkel auf die Produktstirnseite projiziert.

Der Erfindung liegt somit die Aufgabe zugrunde, eine Vorrichtung der eingangs genannten Art anzugeben, bei der die zuvor erwähnten Probleme beseitigt sind. Dabei soll unter Vermeidung von Totalreflexionen eine möglichst gleichmäßige bzw. homogene Ausleuchtung der Produktquerschnittsfläche erreicht werden.

Die Aufgabe wird erfindungsgemäß durch eine Vorrichtung zum Aufschneiden von Lebensmittelprodukten mit den Merkmalen des Anspruchs 1 gelöst. Bevorzugte Ausführungsformen sind in den Unteransprüchen angegeben.

Die erfindungsgemäße Vorrichtung zum Aufschneiden von Lebensmittelprodukten, insbesondere Hochleistungsslicer, umfasst eine eine Zuführebene definierende Produktzuführung, mittels welcher die Produkte entlang der Zuführebene in einer Zuführrichtung einer in einem Aufschneidebereich gelegenen Schneidebene zugeführt werden, in der sich das Schneidmesser insbesondere rotierend und/oder umlaufend bewegt, das zum Abtrennen von Scheiben von den Produkten mit einer, insbesondere sich parallel zur Zuführebene und senkrecht zur Zuführrichtung erstreckenden, Schneidkante zusammenwirkt. Zudem umfasst die Vorrichtung eine Nachweiseinrichtung für aus dem Aufschneidebereich reflektierte Strahlung und eine Auswerteeinrichtung zum Auswerten der nachgewiesenen Strahlung, sowie eine Beleuchtungseinrichtung zum Ausleuchten des Aufschneidebereiches, die zur zumindest im Wesentlichen frontalen Ausleuchtung der Produktstirnseite in dem vor dem Aufschneidebereich gelegenen Halbraum sowie oberhalb der Zuführebene angeordnet ist und zumindest eine Strahlungsquelle sowie eine dieser zugeordnete Blendenanordnung aufweist, die zur Bildung einer Mehrzahl von optisch voneinander getrennten länglichen, sich jeweils in Richtung des Aufschneidebereiches erstreckenden und einander benachbart angeordneten Beleuchtungsstrahlungspfaden mit einer Mehrzahl von Lichtschächten oder einer Mehrzahl von Elementen aus lichtleitendem oder lichtdurchlässigem Material versehen ist.

Aufgrund dieser Ausbildung wird unter Vermeidung der bisher entstehenden Totalreflexionen eine äußerst gleichmäßige bzw. homogene Ausleuchtung der Produktstirnseite erreicht, was sich positiv insbesondere auf die Schnitt- und Portionsqualität sowie die Produktivität der Gesamtanlage über den Produktdurchsatz auswirkt. Es wird nunmehr an jedem Punkt der Schneidebene die gleiche Helligkeit erreicht, da dort die bisher übliche Überlappung von benachbarten Strahlungsquellen vermieden wird. Die Arbeitsgeschwindigkeit der insbesondere ein Kamerasystem umfassenden Nachweiseinrichtung sowie der Auswerteeinrichtung wird deutlich erhöht. Zum Ausleuchten des Aufschneidebereiches genügen kleinere Zeitfenster, womit insbesondere höhere Schneidmesserdrehzahlen und/oder breitere Schneidschächte ermöglicht werden. Es werden somit verschiedene anwendungstechnische Probleme hinsichtlich Robustheit, Genauigkeit und Handhabbarkeit der Schneidvorrichtung bzw. Hochleistungsslicer überwunden.

Bevorzugt definiert die Blendenanordnung zumindest eine Reihe von in einer zur Schneidkante oder zur Schneidebene parallelen Richtung aufeinanderfolgenden Beleuchtungsstrahlungspfaden.

Den jeweiligen Beleuchtungsstrahlungspfaden kann insbesondere jeweils wenigstens eine Strahlungsquelle zugeordnet sein. Es ist also insbesondere auch denkbar, zumindest einigen Beleuchtungsstrahlungspfaden jeweils mehrere Strahlungsquellen zuzuordnen.

Des Weiteren kann vorgesehen sein, dass jeder Strahlungsquelle oder zumindest einer Mehrzahl von Strahlungsquellen eine die Strahlen bündelnde Optik zugeordnet ist.

Gemäß einer bevorzugten praktischen Ausführungsform der erfindungsgemäßen Vorrichtung ist die Blendenanordnung als ein sich von der Strahlungsquelle in Richtung des Aufschneidebereiches erstreckender Vorbau der Strahlungsquelle ausgebildet.

Die Beleuchtungsstrahlungspfade können beispielsweise jeweils eine in Richtung ihrer Längserstreckung gemessene Länge von einigen Zentimetern aufweisen. Dabei kann deren Länge beispielsweise im Bereich von 4 cm liegen oder auch etwas geringer sein. Die Höhe der Beleuchtungsstrahlungspfade kann beispielsweise in etwa so bemessen sein wie deren Länge. Grundsätzlich sind jedoch auch andere Abmessungen dieser Beleuchtungsstrahlungspfade denkbar.

Gemäß einer zweckmäßigen praktischen Ausführungsform der erfindungsgemäßen Vorrichtung weist die Blendenanordnung zur Ausbreitung der Strahlung eine Mehrzahl von zum Aufschneidebereich weisenden Lichtschächten und/oder Leuchtelementen auf. Es sind insbesondere auch solche Ausführungen denkbar, bei denen die Beleuchtungsstrahlungspfade zur Ausbreitung der Strahlung in Richtung des Aufschneidebereiches ein Gas, insbesondere Umgebungsluft, oder ein festes oder flüssiges lichtleitendes und/oder lichtdurchlässiges Material, insbesondere Glas oder Kunststoff, umfassen. Insbesondere in dem Fall, dass Lichtschächte gebildet werden, ist es von Vorteil, wenn die Blendenanordnung lichtundurchlässige, insbesondere lamellenartige, Trennwände umfasst und die Beleuchtungsstrahlungspfade durch diese Trennwände optisch voneinander getrennt sind.

Damit ergibt sich eine alternierende Anordnung von Beleuchtungsstrahlungspfaden und gegebenenfalls Trennwänden, wobei in Abstrahlrichtung jeweils ein Schacht bzw. Lichtpfad zur Lichtlenkung entstehen kann. Einem jeweiligen Schacht bzw. Pfad können eine oder auch mehrere Lichtquellen zugeordnet sein.

Sind Trennwände vorgesehen, so umfasst die Blendenanordnung zweckmäßigerweise zumindest einen die Trennwände randseitig übergreifenden Quersteg, durch den die Trennwände in definiertem Abstand relativ zueinander fixiert sind. Dabei können der Quersteg und/oder die Trennwände beispielsweise randseitig mit Schlitzen versehen sein, über die der Quersteg und die Trennwände zusammensteckbar sind.

Alternativ kann die Blendenanordnung beispielsweise auch zumindest ein Verbindungsorgan, insbesondere ein in randseitigen Durchbrechungen der Trennwände geführtes Seil oder eine die Trennwände randseitig durchgreifende Stange umfassen, auf das bzw. die zwischen die Trennwände einsetzbare Abstandshalter aufgefädelt bzw. aufgereiht sind.

Vorteilhafterweise sind auch solche Ausführungen denkbar, bei denen die Trennwände der Blendenanordnung mit angeformten Abstandshaltern versehen sind, durch welche die Trennwände in einem definierten Abstand relativ zueinander gehalten sind.

Es kann also beispielsweise wenigstens ein Quersteg die Trennwände übergreifen und diese auf einer Längsseite fixieren. An dem Quersteg können beispielsweise an der den Schächten zugewandten Seite insbesondere in die Zwischenräume zwischen jeweils zwei Trennwänden eingreifende Zungen vorgesehen sein, die den Abstand sicherstellen. Dazu kann beispielsweise der Quersteg vom Rand her etwas eingeschlitzt sein. Ergänzend können auch die Trennwände etwas von der Oberseite her geschlitzt sein, um den Quersteg geringfügig eingreifen zu lassen und die Trennwände auch in Abstrahlrichtung zu fixieren. Der Quersteg selbst kann beispielsweise am Gehäuse der Blendenanordnung oder über ein Trägerelement im Bereich einer Strahlungsquellenaufnahme befestigt sein. Mindestes ein in randseitigen Durchbrechungen der Trennwände geführtes Seil kann in den Endbereichen gespannt werden. Auch mindestens eine die Trennwände randseitig durchgreifende Stange kann in zumindest einem Endbereich eine Spannvorrichtung wie beispielsweise ein Gewinde aufweisen.

Mit angeformten Abstandshaltern versehene Trennwände können beispielsweise einen abgewinkelten Randbereich besitzen.

Gemäß einer weiteren vorteilhaften Ausführungsform der erfindungsgemäßen Vorrichtung sind die Beleuchtungsstrahlungspfade durch eine Mehrzahl von aneinander gereihten, insbesondere plattenförmigen Elementen aus lichtleitendem und/oder lichtdurchlässigem Material gebildet, die mechanisch aneinander fixiert und durch wenigstens eine lichtundurchlässige Beschichtung optisch voneinander getrennt sind.

Es ist also beispielsweise ein Aufbau aus beschichteten, dünnen, transparenten Platten aus Glas oder Plexiglas denkbar. Dabei können die Platten insbesondere einseitig mit einer lichtdichten Beschichtung versehen sein. Die aneinander gereihten bzw. aneinander fixierten, zum Beispiel verklebten Platten können dann einen Stab bilden, der beispielsweise für eine an einer der langen Seiten angebrachte Zeile von Strahlungsquellen eine Blende darstellt, die ausgangsseitig die erwünschte reflexfreie Lichtstruktur liefert. Die Beleuchtungsstrahlungspfade sind im vorliegenden Fall also nicht mehr durch Schächte, sondern durch beispielsweise plattenförmige Elemente aus lichtleitendem und/oder lichtdurchlässigem Material gebildet, die durch wenigstens eine lichtundurchlässige Beschichtung optisch voneinander getrennt sind.

Die Strahlungsquellen umfassen bevorzugt jeweils zumindest eine Leuchtdiode. Es sind insbesondere auch solche Ausführungen denkbar, bei denen ein oder mehrere zueinander parallele Streifen aus jeweils mehreren in einer zur Schneidkante oder zur Schneidebene parallelen Richtung aufeinanderfolgenden Strahlungsquellen, insbesondere Leuchtdioden, vorgesehen sind, wobei den Beleuchtungsstrahlungspfaden abwechselnd jeweils ein oder mehrere Strahlungsquellen bzw. Leuchtdioden zugeordnet sind. Damit lässt sich beispielsweise auch die Leuchtkraft gleichmäßig über die sich parallel zur Schneidkante erstreckende Länge der Beleuchtungseinrichtung vermindern, wenn ein Streifen abgeschaltet oder gedimmt wird. Es ist beispielsweise auch der Einsatz verschiedener Farben und/oder die Nutzung wenigstens einer Zeile mit Stroboskopblitzeffekten denkbar. Im letzteren Fall können verschiedene Bilder nacheinander aufgenommen und einander überlagert werden. Es sind jedoch beispielsweise auch solche Ausführungen denkbar, bei denen zur Bildung der Strahlungsquellen an den Enden von Lichtleitfasern austretendes Licht oder ein kontinuierlicher Leuchtstab verwendet werden.

Von Vorteil ist insbesondere auch, wenn die Beleuchtungseinrichtung als einheitlicher Block ausgeführt ist, der auf seiner dem Aufschneidebereich zugewandten Stirnseite mit einer transparenten Abdeckung versehen ist.

Es kann also beispielsweise die gesamte Beleuchtungseinrichtung als zum Beispiel gekapselter Block ausgeführt sein, wobei der Lichtaustritt über eine transparente Abdeckung an der dem auszuleuchtenden Aufschneidebereich zugewandten Stirnseite der Blendenanordnung erfolgt. Damit wird ein zuverlässiger Schutz gegenüber Schmutz, Spritzwasser und mechanischen Einflüssen erreicht. Zudem ist auch eine Integration der Beleuchtungseinrichtung in ein zugeordnetes Gehäuse der insbesondere eine Kamera umfassenden Nachweiseinrichtung denkbar.

Von Vorteil ist insbesondere auch, wenn verschiedenen Beleuchtungsstrahlungspfaden zugeordnete Strahlungsquellen individuell ansteuerbar und/oder individuell variabel einstellbar sind, insbesondere zumindest hinsichtlich deren Lichteigenschaften und/oder Beleuchtungsstärken.

Bevorzugt ist mittels der Beleuchtungseinrichtung eine Lichtstruktur, insbesondere ein Streifenmuster, auf der auszuleuchtenden Produktstirnseite erzeugbar. Dabei kann die Lichtstruktur zumindest teilweise durch eine entsprechende Ansteuerung und/oder Einstellung von verschiedenen Beleuchtungsstrahlungspfaden zugeordneten Strahlungsquellen erzeugbar sein.

Gemäß einer zweckmäßigen praktischen Ausführungsform der erfindungsgemäßen Vorrichtung ist die Lichtstruktur zumindest teilweise durch eine Blende und/oder durch insbesondere linienförmige Markierungen erzeugt, die auf eine an der dem Aufschneidebereich zugewandten Stirnseite der Beleuchtungseinrichtung vorgesehene transparente Abdeckung aufgebracht oder in eine solche transparente Abdeckung eingebracht sind.

Es kann also beispielsweise eine spezielle Lichtstrukturierung erzeugt werden, indem die Strahlungsquellen in Segmenten der Blendenanordnung mit einem speziellen Ansteuermuster angesteuert werden. Es können also z.B. einzelne Strahlungsquellen oder Gruppen von Strahlungsquellen alternierend über die Breite der Beleuchtungseinrichtung unterschiedliche Lichteigenschaften und/oder Beleuchtungsstärken besitzen. So ist beispielsweise die Lichtleistung für jedes Beleuchtungssegment individuell einstellbar, wobei benachbarte Beleuchtungssegmente zum Beispiel unterschiedlich hell leuchten. Damit kann eine Lichtstruktur wie beispielsweise ein Streifenmuster generiert werden, mit dem insbesondere die Oberkante eines Produktes oder Hohlräume in einem Produkt detektiert werden können. Dabei wird der Brechungseffekt der Lichtstruktur an Kanten genutzt, die die Schnittfläche begrenzen. Neben der Möglichkeit, über ein geeignetes Ansteuermuster ein Linienmuster zu erzeugen, um geometrische Eigenschaften wie Kanten in der ansonsten planen Schnittfläche zu erkennen, wird unter anderem auch die weitreichende Möglichkeit geschaffen, mit verschiedenen Lichtfrequenzen zur Detektion von Qualitätsmerkmalen zu arbeiten.

So ist beispielsweise ein kombinierter Einsatz von verschiedenen Lichtfrequenzen in Verbindung von Multispektralfiltern und geeigneten Aufnahmesensoren denkbar, die in Form von Bayerfiltern für CCD-Kameras oder von Mosaikfiltern mit vier Frequenzen (RGB + NIR) bekannt sind.

Denkbar ist insbesondere auch eine Anwendung mit zum Beispiel vier bis fünf Lichtfrequenzen, zum Beispiel mit den RGB-Farben und Frequenzen aus dem Infrarot-Absorptionsspektrum von Kunststoffen bei insbesondere etwa 1700 nm oder von Wasser bei insbesondere etwa 1450 nm. Mit einem geeigneten hochauflösenden Aufnahmesensor wie zum Beispiel einer CMOS-Kamera, die im sichtbaren Bereich bis in den NIR-Bereich bis 1800 nm lichtempfindlich ist, können dann zum Beispiel in einem Lebensmittelprodukt wie Wurst, Käse oder Schinken Einlagerungen von Fremdkörpern aus Kunststoff oder Einlagerungen von wasserarmen Fremdstoffen aufgrund der Abweichung vom Verhalten des Grundmaterials detektiert werden. Auch in diesem Zusammenhang bringt die durch die erfindungsgemäße Lösung gleichmäßige bzw. homogene Ausleuchtung der ProduktQuerschnittsfläche erhebliche Vorteile mit sich. So wird der äußerst störende Einfluss von Intensitätsschwankungen vermieden, die bisher aufgrund von unregelmäßigen Ausleuchtungen entstanden sind.

Zudem können Streifenmuster insbesondere auch mit einer Blende oder mit Linien erzeugt werden, die insbesondere auf der transparenten Abdeckung auf der dem Aufschneidebereich zugewandten Stirnseite der Beleuchtungseinrichtung aufgebracht oder in diese eingearbeitet sind.

Um die Produktränder auf der Produktoberseite deutlicher herauszuarbeiten, kann auch eine zusätzliche Beleuchtung durch Laserstrahlung von oben vorgesehen sein. Dies ist von Vorteil, da bei der Verwendung eines Lasers die Leuchtdichte unabhängig vom Abstand zum zu beleuchtenden Produkt erhalten bleibt.

Zu beachten ist hierbei, dass die Anbringungsposition der Laser eine Verschmutzung ausschließt. Die Anbringung der Laser erfolgt daher zweckmäßigerweise im Bereich des Schneidmesserkopfes und somit möglichst dicht hinter der Rückseite des Schneidmessers.

Dabei können insbesondere zumindest drei Laser-Lichtquellen in seitlich leicht versetzter Position eingesetzt werden. Zweckmäßigerweise wird ein Paket aus abgewinkelten Laserstrahlen erzeugt, um direkt von oben her, aus dem Zentrum um den Schneidmesserkopf heraus, eine Ausleuchtung der gesamten Schneidschachtbreite zu erreichen.

Um mit dem Laserlicht von oben her die Produktvorderkante zu beleuchten, kann die Schneidkante bzw. Formschale von der Oberseite her etwas ausgespart sein. Dazu kann insbesondere deren oberer Rand im Bereich einer jeweiligen Produkt-durchtrittsöffnung etwas, zum Beispiel um einige wenige Millimeter, von der Schneidebene zurück versetzt sein, so dass das Produkt nur unten und an den Seiten bis an die Schneidebene bzw. Vorderseite herangeführt ist. Im Zusammenhang mit der Abstützung und Anlage des Produktes für saubere Schnitte reicht dies in der Regel aus.

Die Erfindung wird im Folgenden anhand von Ausführungsbeispielen unter Bezugnahme auf die Zeichnung näher erläutert; in dieser zeigen:
- Fig. 1: eine schematische Teildarstellung einer beispielhaften Ausführungsform einer erfindungsgemäßen Vorrichtung zum Aufschneiden von Lebensmittelprodukten,
- Fig. 2: eine Frontansicht des Aufschneidebereiches der Vorrichtung gemäß Fig. 1 in Richtung des Pfeils 40 in Fig. 1,
- Fig. 3: eine schematische Draufsicht eines Teils einer beispielhaften Ausführungsform der Beleuchtungseinrichtung der Vorrichtung gemäß Fig. 1,
- Fig. 4: eine schematische Querschnittsteildarstellung der Beleuchtungseinrichtung gemäß Fig. 3, geschnitten entlang der Linie I-I in Fig. 3,
- Fig. 5: eine perspektivische Ansicht einer weiteren beispielhaften Ausführungsform der Beleuchtungseinrichtung der Vorrichtung gemäß Fig. 1,
- Fig. 6: eine vergrößerte Darstellung des Teilbereichs A der Beleuchtungseinrichtung gemäß Fig. 5,
- Fig. 7: eine perspektivische Darstellung einer beispielhaften Ausführungsform einer Formschale der Vorrichtung gemäß Fig. 1 und
- Fig. 8: eine schematische Draufsicht der Formschale gemäß Fig. 7.

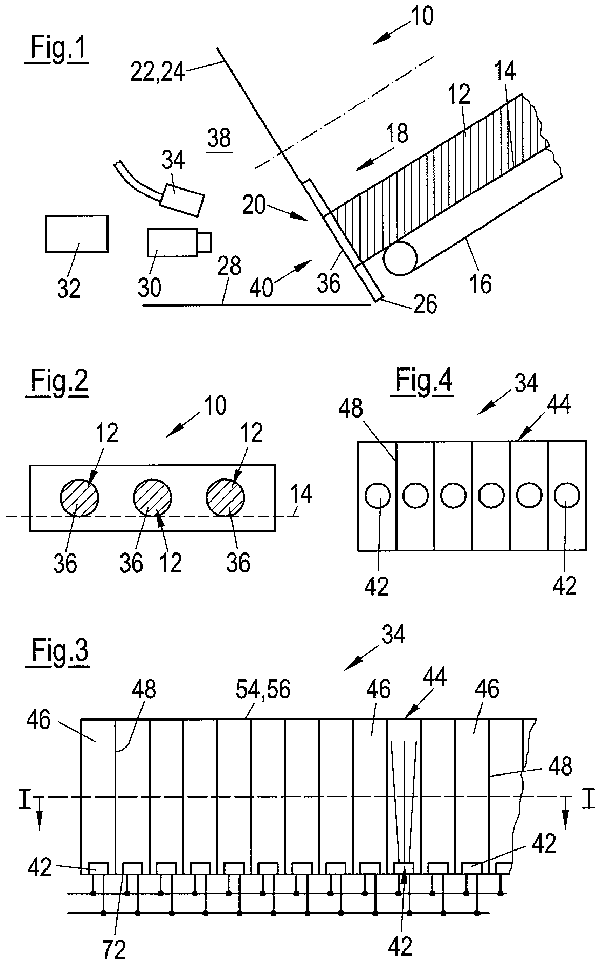

Fig. 1 zeigt in schematischer Teildarstellung eine beispielhafte Ausführungsform einer erfindungsgemäßen Vorrichtung 10 zum Aufschneiden von Lebensmittelprodukten 12 (vgl. auch Fig. 2), bei der es sich insbesondere um einen Hochleistungsslicer handeln kann.

Die Schneidvorrichtung 10 umfasst eine eine Zuführebene 14 definierende Produktzuführung 16, mittels welcher die Produkte 12 entlang der Zuführebene 14 in einer Zuführrichtung 18 einer in einem Aufschneidebereich 20 gelegenen Schneidebene 22 zugeführt werden. In der Schneidebene 22 bewegt sich ein Schneidmesser 24 insbesondere rotierend und/oder umlaufend, das zum Abtrennen von Scheiben von den Produkten 12 mit einer sich insbesondere parallel zur Zuführebene 14 und senkrecht zur Zuführrichtung 18 erstreckenden Schneidkante 26 zusammenwirkt. In dem vor dem Aufschneidebereich 20 gelegenen Halbraum 38 kann zum Abtransport der abgetrennten Scheiben beispielsweise ein Portionierband 28 oder dergleichen vorgesehen sein.

Die Schneidvorrichtung 10 umfasst überdies eine Nachweiseinrichtung 30 für aus dem Aufschneidebereich 20 reflektierte Strahlung, eine Auswerteeinrichtung 32 zum Auswerten der nachgewiesenen Strahlung und eine Beleuchtungseinrichtung 34 zum Ausleuchten des Aufschneidebereiches 20. Die Nachweiseinrichtung 30 kann insbesondere wenigstens eine Kamera umfassen.

Die Beleuchtungseinrichtung 34 ist zur zumindest im Wesentlichen frontalen Ausleuchtung der vorderen Produktstirnseite 36 in dem vor dem Aufschneidebereich 20 gelegenen Halbraum 38 sowie oberhalb der Zuführebene 14 angeordnet.

Fig. 2 zeigt in einer Frontansicht den Aufschneidebereich 20 der Schneidvorrichtung 10 gemäß Fig. 1 in Richtung des Pfeils 40 in Fig. 1. Dabei sind beispielsweise drei in zueinander paralleler Ausrichtung der Schneidebene 22 zuführbare Lebensmittelprodukte 12 zu erkennen. Zusätzlich können der Schneidebene 22 jedoch auch mehrere oder weniger Produkte 12 gleichzeitig zugeführt werden. In dieser Fig. 2 sind insbesondere auch die Produktstirnseiten 36 zu erkennen.

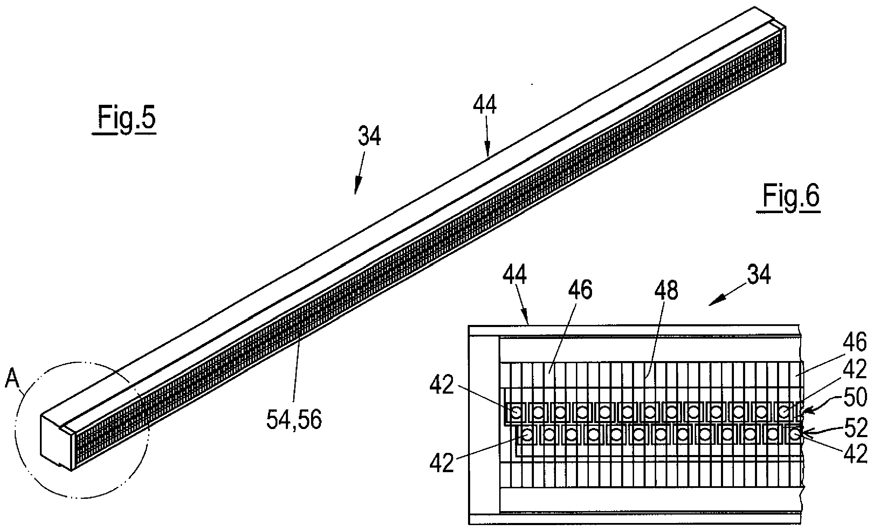

Wie insbesondere den Fig. 3, 4 und 6 entnommen werden kann, umfasst die Beleuchtungseinrichtung 34 eine Vielzahl von Strahlungsquellen 42 sowie eine diesen zugeordnete Blendenanordnung 44. Die Blendenanordnung 44 definiert eine Mehrzahl von optisch voneinander getrennten länglichen Beleuchtungsstrahlungspfaden 46, die sich jeweils in Richtung des Aufschneidebereiches 20 erstrecken und einander benachbart angeordnet sind. Wie am besten anhand der Fig. 3 und 6 entnommen werden kann, definiert die Blendenanordnung 44 eine Reihe von in einer zur Schneidkante 26 parallelen Richtung aufeinanderfolgenden Beleuchtungsstrahlungspfaden 46. Dabei ist im vorliegenden Fall jedem Beleuchtungsstrahlungspfad 46 beispielsweise eine Strahlungsquelle 42 zugeordnet. Grundsätzlich sind jedoch auch solche Ausführungen denkbar, bei denen zumindest einigen Beleuchtungsstrahlungspfaden 46 jeweils mehrere Strahlungsquellen 42 zugeordnet sind. Die Strahlungsquellen 46 sind, wie dargestellt, zweckmäßigerweise im Bereich der dem auszuleuchtenden Aufschneidebereich 20 zugewandten Stirnseite 54 gegenüberliegenden Rückseite der Blendenanordnung 44 positioniert. Im vorliegenden Fall sind die Strahlungsquellen 42 beispielsweise zueinander parallel geschaltet.

Die Schneidvorrichtung 10 ist somit mit einer die Beleuchtungseinrichtung 34, die Nachweiseinrichtung 30 und die Auswerteeinrichtung 32 umfassenden optischen Waage versehen.

Die Blendenanordnung 44 ist als ein sich von den Strahlungsquellen 42 in Richtung des Aufschneidebereiches 20 erstreckender Vorbau der Strahlungsquellen 42 ausgebildet. Dabei weisen die Beleuchtungsstrahlungspfade 46 in Richtung des Aufschneidebereiches 20 jeweils eine bestimmte Länge von insbesondere einigen Zentimetern auf. Diese Länge kann beispielsweise im Bereich von 4 cm liegen oder auch geringer sein. Die Höhe der Beleuchtungsstrahlungspfade 46 kann im Bereich deren Länge liegen.

Die Blendenanordnung 44 kann - wie im Einleitungsteil erwähnt - zur Ausbreitung der Strahlung insbesondere eine Mehrzahl von zum Aufschneidebereich 20 weisenden Lichtschächten und/oder Leuchtelementen aufweisen.

Insbesondere in dem Fall, dass die Blendenanordnung 44 mit einer Mehrzahl von Lichtschächten versehen ist, kann sie lichtundurchlässige, insbesondere lamellenartige Trennwände 48 umfassen, um die Beleuchtungsstrahlungspfade optisch voneinander zu trennen. Dabei kann die Blendenanordnung 44 insbesondere zumindest einen die Trennwände 48 randseitig übergreifenden Quersteg umfassen, durch den die Trennwände 48 in definiertem Abstand relativ zueinander fixiert sind. Der Quersteg und/oder die Trennwände 48 können hierbei insbesondre randseitig mit Schlitzen versehen sein, über die der Quersteg und die Trennwände 48 zusammensteckbar sind.

Die Blendenanordnung 44 kann jedoch beispielsweise auch zumindest ein Verbindungsorgan, insbesondere ein in randseitigen Durchbrechungen der Trennwände 48 geführtes Seil oder eine die Trennwände 48 randseitig durchgreifende Stange umfassen, auf das bzw. die zwischen die Trennwände 48 einsetzbare Abstandshalter aufgefädelt bzw. aufgereiht sind. Alternativ können die Trennwände 48 beispielsweise aber auch mit angeformten Abstandshaltern versehen sein, durch die die Trennwände 48 in einem definierten Abstand relativ zueinander gehalten sind.

Alternativ können die Beleuchtungsstrahlungspfade 46 insbesondere auch durch eine Mehrzahl von aneinandergereihten, insbesondere plattenförmigen Elementen aus lichtleitendem und/oder lichtdurchlässigem Material gebildet sein, die mechanisch aneinander fixiert und durch wenigstens eine lichtundurchlässige Beschichtung optisch voneinander getrennt sind. In diesem Fall sind die Beleuchtungsstrahlungspfade 46 also anstatt durch Lichtschächte durch lichtleitende bzw. lichtdurchlässige plattenförmige Elemente gebildet.

Wie dargestellt, können die Strahlungsquellen 42 jeweils zumindest eine Leuchtdiode umfassen. Während im vorliegenden Fall den Beleuchtungsstrahlungspfaden 46 jeweils nur eine Strahlungsquelle 42 bzw. Leuchtdiode zugeordnet ist, sind grundsätzlich auch solche Ausführungen denkbar, bei denen den Beleuchtungsstrahlungspfaden 46 zumindest teilweise auch jeweils mehrere Strahlungsquellen 42 bzw. Leuchtdioden zugeordnet sind. Es können beispielsweise auch ein oder mehrere zueinander parallele Streifen 50, 52 aus jeweils mehreren in einer zur Schneidkante 26 parallelen Richtung aufeinanderfolgenden Strahlungsquellen 42 bzw. Leuchtdioden vorgesehen sein (vgl. Fig. 6). Dabei ist in der Darstellung gemäß Fig. 6 den Beleuchtungsstrahlungspfaden 46 abwechselnd beispielsweise jeweils eine Strahlungsquelle 42 bzw. Leuchtdiode zugeordnet. Im vorliegenden Fall sind beispielsweise zwei parallele Streifen 50, 52 aus jeweils mehreren Strahlungsquellen 42 bzw. Leuchtdioden vorgesehen. Wie bereits erwähnt, können den Beleuchtungsstrahlungspfaden 46 zumindest teilweise auch jeweils mehrere Strahlungsquellen 42 bzw. Leuchtdioden zugeordnet sein.

Wie am besten anhand der Fig. 5 zu erkennen ist, kann die Beleuchtungseinrichtung 34 insbesondere als einheitlicher Block ausgeführt sein, der auf seiner dem auszuleuchtenden Aufschneidebereich 20 zugewandten Stirnseite 54 mit einer transparenten Abdeckung 56 versehen sein kann.

Über eine Steuereinrichtung, die in die Auswerteeinrichtung 32 integriert oder auch getrennt davon vorgesehen sein kann, können verschiedenen Beleuchtungsstrahlungspfaden 46 zugeordnete Strahlungsquellen insbesondere auch individuell ansteuerbar und/oder individuell variabel einstellbar sein, insbesondere zumindest hinsichtlich deren Lichteigenschaften und/oder Beleuchtungsstärken.

Es sind insbesondere auch solche Ausführungen denkbar, bei denen mittels der Beleuchtungseinrichtung eine Lichtstruktur, insbesondere ein Streifenmuster, auf der auszuleuchtenden Produktstirnseite 36 erzeugbar ist, wie ebenfalls bereits erläutert wurde.

Um die Produktränder auf der Produktoberseite deutlicher herauszuarbeiten, kann eine zusätzliche Beleuchtung durch Laserstrahlung von oben vorgesehen sein. Dies ist von Vorteil, da bei der Verwendung von Lasern die Leuchtdichte unabhängig vom Abstand zum zu beleuchtenden Produkt 12 erhalten bleibt. Dabei ist besonders darauf zu achten, dass die Anbindungsposition der Laser eine Verschmutzung ausschließt. Von Vorteil ist daher deren Anbringung im Bereich des Schneidmesserkopfes und somit möglichst dicht hinter der Rückseite des Schneidmessers 24.

Dabei können mehrere, insbesondere zumindest drei Laser-Lichtquellen in seitlich leicht versetzter Position vorgesehen werden.

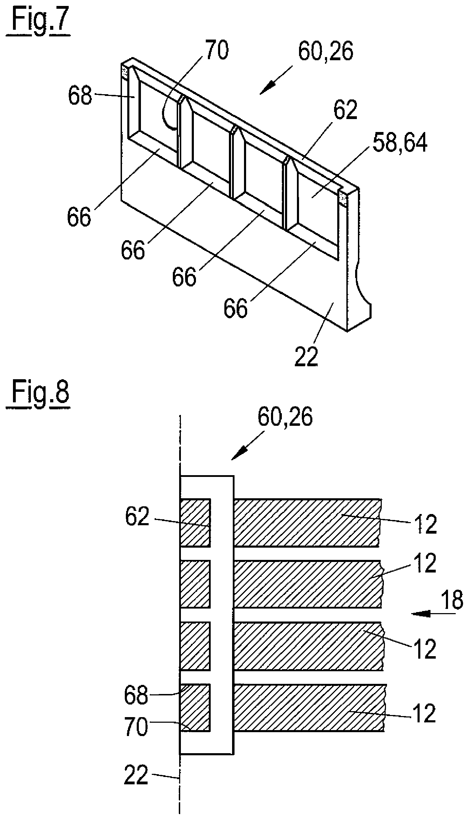

Um mit dem Laserlicht von oben her die Produktförderkante zu beleuchten, kann die Schneidkante 26 bzw. Formschale 60 (vgl. Fig. 7 und 8) von der Oberseite her etwas ausgespart sein. Dazu ist deren oberer Rand 62 im Bereich einer jeweiligen Produkt-Durchtrittsöffnung 64 etwas, insbesondere einige wenige Millimeter, von der Schneidebene 22 zurückversetzt, so dass ein jeweiliges Produkt 12 nur unten und an den Seiten bis an die Schneidebene 22 bzw. Vorderseite herangeführt ist. Im Zusammenhang mit der Abstützung und Anlage der Produkte 12 für saubere Schnitte reicht dies in der Regel aus. In die Darstellung gemäß den Fig. 7 und 8 werden der Schneidebene 22 beispielsweise gleichzeitig vier Produkte 12 in einer zueinander parallelen Anordnung zugeführt. Entsprechend umfasst die Formschale 60 im vorliegenden Fall vier Schneidschächte 58 bzw. Produkt-Durchtrittsöffnungen 64. Dabei sind die Produkte 12 jeweils an einer unteren Auflagefläche 66 und zwei einander gegenüberliegenden Seiten 68, 70 eines jeweiligen Schneidschachtes 58 bzw. Produkt-Durchtrittsöffnung 64 abgestützt.

### Bezugszeichenliste

- 10: Vorrichtung zum Aufschneiden von Lebensmittelprodukten
- 12: Lebensmittelprodukt
- 14: Zuführebene
- 16: Produktzuführung
- 18: Zuführrichtung
- 20: Aufschneidebereich
- 22: Schneidebene
- 24: Schneidmesser
- 26: Schneidkante
- 28: Portionierband
- 30: Nachweiseinrichtung
- 32: Auswerteeinrichtung
- 34: Beleuchtungseinrichtung
- 36: Produkt-Stirnseite
- 38: Halbraum
- 40: Pfeil
- 42: Strahlungsquelle
- 44: Blendenanordnung
- 46: Beleuchtungsstrahlungspfad
- 48: Trennwand
- 50: Streifen
- 52: Streifen
- 54: Stirnseite
- 56: Abdeckung
- 58: Schneidschacht
- 60: Formschale
- 62: oberer Rand
- 64: Produkt-Durchtrittsöffnung
- 66: untere Auflagefläche
- 68: Seite
- 70: Seite

## Patentansprüche

1. Vorrichtung (10) zum Aufschneiden von Lebensmittelprodukten (12), insbesondere Hochleistungsslicer,
mit einer eine Zuführebene (14) definierenden Produktzuführung (16), mittels welcher die Produkte (12) entlang der Zuführebene (14) in einer Zuführrichtung (18) einer in einem Aufschneidebereich (20) gelegenen Schneidebene (22) zugeführt werden, in der sich ein Schneidmesser (24) insbesondere rotierend und/oder umlaufend bewegt, das zum Abtrennen von Scheiben von den Produkten (12) mit einer, insbesondere sich parallel zur Zuführebene (14) und senkrecht zur Zuführrichtung (18) erstreckenden, Schneidkante (26) zusammenwirkt,
mit einer Nachweiseinrichtung (30) für aus dem Aufschneidebereich (20) reflektierte Strahlung und einer Auswerteeinrichtung (32) zum Auswerten der nachgewiesenen Strahlung, und mit einer Beleuchtungseinrichtung (34) zum Ausleuchten des Aufschneidebereiches (20), die in dem vor dem Aufschneidebereich (20) gelegenen Halbraum (38) sowie oberhalb der Zuführebene (14) angeordnet ist und zumindest eine Strahlungsquelle (42) sowie eine dieser zugeordnete Blendenanordnung (44) aufweist, **dadurch gekennzeichnet, dass** die Beleuchtungseinrichtung (34) zur zumindest im Wesentlichen frontalen Ausleuchtung der Produktstirnseite (36) angeordnet ist und dass die Blendenanordnung (44) zur Bildung einer Mehrzahl von optisch voneinander getrennten länglichen, sich jeweils in Richtung des Aufschneidebereiches (20) erstreckenden und einander benachbart angeordneten Beleuchtungsstrahlungspfaden (46) eine Mehrzahl von Lichtschächten oder eine Mehrzahl von Elementen aus lichtleitenden und/oder lichtdurchlässigem Material aufweist.

2. Vorrichtung nach Anspruch 1,
**dadurch gekennzeichnet, dass** die Blendenanordnung (44) zumindest eine Reihe von in einer zur Schneidkante (26) oder zur Schneidebene (22) parallelen Richtung aufeinanderfolgenden Beleuchtungsstrahlungspfaden (46) definiert.

3. Vorrichtung nach Anspruch 1 oder 2,
**dadurch gekennzeichnet, dass** jedem Beleuchtungsstrahlungspfad (46) wenigstens eine Strahlungsquelle (42) zugeordnet ist, und/oder dass zumindest einigen Beleuchtungsstrahlungspfaden (46) jeweils mehrere Strahlungsquellen (42) zugeordnet sind.

4. Vorrichtung nach einem der vorstehenden Ansprüche,
**dadurch gekennzeichnet, dass** die Blendenanordnung (44) als ein sich von der Strahlungsquelle (42) in Richtung des Aufschneidebereiches (20) erstreckender Vorbau der Strahlungsquelle (42) ausgebildet ist.

5. Vorrichtung nach einem der vorstehenden Ansprüche,
dadurch **gekenntzeichnet,** dass die Blendenanordnung (44) lichtundurchlässige, insbesondere lamellenartige,Trennwände (48) umfasst und die Beleuchtungsstrahlungspfade (46) durch diese Trennwände (48) optisch voneinander getrennt sind.

6. Vorrichtung nach Anspruch 5,
**dadurch gekennzeichnet, dass** die Blendenanordnung (44) zumindest einen die Trennwände (48) randseitig übergreifenden Quersteg umfasst, durch den die Trennwände (48) in definiertem Abstand relativ zueinander fixiert sind, wobei insbesondere der Quersteg und/oder die Trennwände (48) randseitig mit Schlitzen versehen ist bzw. sind, über die der Quersteg und die Trennwände (48) zusammensteckbar sind.

7. Vorrichtung nach Anspruch 5,
**dadurch gekennzeichnet, dass** die Blendenanordnung (44) zumindest ein Verbindungsorgan, insbesondere ein in randseitigen Durchbrechungen der Trennwände (48) geführtes Seil oder eine die Trennwände (48) randseitig durchgreifende Stange, umfasst, auf das bzw. die zwischen die Trennwände (48) einsetzbare Abstandshalter aufgefädelt bzw. aufgereiht sind.

8. Vorrichtung nach Anspruch 5,
**dadurch gekennzeichnet, dass** die Trennwände (48) der Blendenanordnung (44) mit angeformten Abstandshaltern versehen sind, durch welche die Trennwände (48) in einem definierten Abstand relativ zueinander gehalten sind.

9. Vorrichtung nach einem der Ansprüche 1 bis 4,
**dadurch gekennzeichnet, dass** die Beleuchtungsstrahlungspfade (46) durch eine Mehrzahl von aneinandergereihten, insbesondere plattenförmigen, Elementen aus lichtleitendem und/oder lichtdurchlässigem Material gebildet sind, die mechanisch aneinander fixiert und durch wenigstens eine lichtundurchlässige Beschichtung optisch voneinander getrennt sind.

10. Vorrichtung nach einem der vorstehenden Ansprüche,
**dadurch gekennzeichnet, dass** die Strahlungsquellen (42) jeweils zumindest eine Leuchtdiode umfassen und/oder dass ein oder mehrere zueinander parallele Streifen (50, 52) aus jeweils mehreren in einer zur Schneidkante (26) oder zur Schneidebene (22) parallelen Richtung aufeinanderfolgenden Strahlungsquellen (42), insbesondere Leuchtdioden, vorgesehen sind, wobei den Beleuchtungspfaden (46) abwechselnd jeweils ein oder mehrere Strahlungsquellen (42) bzw. Leuchtdioden zugeordnet sind.

11. Vorrichtung nach einem der vorstehenden Ansprüche,
**dadurch gekennzeichnet, dass** die Beleuchtungseinrichtung (34) als einheitlicher Block ausgeführt ist, der auf seiner dem Aufschneidebereich (20) zugewandten Stirnseite (54) mit einer transparenten Abdeckung (56) versehen ist.

12. Vorrichtung nach einem der vorstehenden Ansprüche,
**dadurch gekennzeichnet, dass** verschiedenen Beleuchtungsstrahlungspfaden (46) zugeordnete Strahlungsquellen (42) individuell ansteuerbar und/oder individuell variabel einstellbar sind, insbesondere zumindest hinsichtlich deren Lichteigenschaften und/oder Beleuchtungsstärken.

13. Vorrichtung nach einem der vorstehenden Ansprüche,
**dadurch gekennzeichnet, dass** mittels der Beleuchtungseinrichtung (34) eine Lichtstruktur, insbesondere ein Streifenmuster, auf der auszuleuchtenden Produktstirnseite (36) erzeugbar ist, wobei insbesondere die Lichtstruktur zumindest teilweise durch eine entsprechende Ansteuerung und/oder Einstellung von verschiedenen Beleuchtungsstrahlungspfaden (46) zugeordneten Strahlungsquellen (42) erzeugbar ist.

14. Vorrichtung nach Anspruch 13,
**dadurch gekennzeichnet, dass** die Lichtstruktur zumindest teilweise durch eine Blende und/oder durch insbesondere linienförmige Markierungen erzeugt ist, die auf eine an der dem Aufschneidebereich (20) zugewandten Stirnseite (54) der Beleuchtungseinrichtung (32) vorgesehene transparente Abdeckung aufgebracht oder in eine solche transparente Abdeckung eingebracht sind.

## Claims

1. An apparatus (10) for slicing food products (12), in particular a high-performance slicer,
having a product feed (16) which defines a feed plane (14) and by means of which the products (12) are fed along the feed plane (14) in a feed direction (18) to a cutting plane (22) which is disposed in a slicing region (20) and in which a cutting blade (24) moves, in particular in a rotating and/or revolving manner, said cutting blade cooperating with a cutting edge (26) which in particular extends in parallel with the feed plane (14) and perpendicular to the feed direction (18) to cut off slices from the products (12);
having a detection device (30) for radiation reflected from the slicing region (20) and having an evaluation device (32) for evaluating the detected radiation; and
having an illumination device (34) for illuminating the slicing region (20), said illumination device being arranged in the half-space (38) disposed in front of the slicing region (20) and above the feed plane (14) and having at least one radiation source (42) as well as a diaphragm arrangement (44) which is associated therewith, **characterized in that** the illumination device (34) is arranged for an at least substantially frontal illumination of the product end face (36); and **in that** the diaphragm arrangement (44) has a plurality of light compartments or a plurality of elements of light-conducting and/or light permeable material for forming a plurality of elongate illumination radiation paths (46) which are optically separate from one another, which each extend in the direction of the slicing region (20) and which are arranged adjacent to one another.

2. An apparatus in accordance with claim 1,
**characterized in that** the diaphragm arrangement (44) defines at least a number of illumination radiation paths (46) following one another in a direction in parallel with the cutting edge (26) or with the cutting plane (22).

3. An apparatus in accordance with claim 1 or claim 2,
**characterized in that** at least one radiation source (42) is associated with each illumination radiation path (46); and/or **in that** a respective plurality of radiation sources (42) are associated with at least some illumination radiation paths (46).

4. An apparatus in accordance with any one of the preceding claims,
**characterized in that** the diaphragm arrangement (44) is configured as a front attachment of the radiation source (42) extending from the radiation source (42) in the direction of the slicing region (20).

5. An apparatus in accordance with any one of the preceding claims,
**characterized in that** the diaphragm arrangement (44) comprises light impermeable, in particular slat-like, dividing walls (48) and the illumination radiation paths (46) are optically separated from one another by these dividing walls (48).

6. An apparatus in accordance with claim 5,
**characterized in that** the diaphragm arrangement (44) comprises at least one transverse web which engages over the dividing walls (48) at the marginal side and by which the dividing walls (48) are fixed at a defined spacing relative to one another, with the transverse web and/or the dividing walls (48) in particular being provided with slits at the marginal side via which the transverse web and the dividing walls (48) can be plugged together.

7. An apparatus in accordance with claim 5,
**characterized in that** the diaphragm arrangement (44) comprises at least one connection member, in particular a rope guided in the apertures of the dividing walls (48) at the marginal side or a bar engaging through the dividing walls (48) at the marginal side, onto which spacers insertable between the dividing walls (48) can be threaded or strung.

8. An apparatus in accordance with claim 5,
**characterized in that** the dividing walls (48) of the diaphragm arrangement (44) are provided with molded spacers by which the dividing walls (48) are held at a defined spacing relative to one another.

9. An apparatus in accordance with any one of the claims 1 to 4,
**characterized in that** the illumination radiation paths (46) are formed by a plurality of elements which are strung with one another, which are in particular of plate shape, which are formed from light conducting and/or light permeable material, which are mechanically fixed to one another and which are optically separated from one another by at least one light impermeable coating.

10. An apparatus in accordance with any one of the preceding claims,
**characterized in that** the radiation sources (42) each comprise at least one light-emitting diode; and/or **in that** one or more mutually parallel strips (50, 52) of a respective plurality of radiation sources (42), in particular light-emitting diodes, following one another in a direction in parallel with the cutting edge (26) or with the cutting plane (22) are provided, with a respective one or more radiation sources (42) or light-emitting diodes being alternately associated with the illumination paths (46).

11. An apparatus in accordance with any one of the preceding claims,
**characterized in that** the illumination device (34) is configured as a uniform block which is provided with a transparent cover (56) at its end face (54) facing the slicing region (20).

12. An apparatus in accordance with any one of the preceding claims,
**characterized in that** radiation sources (42) associated with different illumination radiation paths (46) are individually controllable and/or individually variably adjustable, in particular at least with respect to their light properties and/or light intensities.

13. An apparatus in accordance with any one of the preceding claims,
**characterized in that** a light structure, in particular a strip pattern, can be generated on the product end face (36) to be illuminated by means of the illumination device (34), with the light structure in particular being able to be generated at least in part by a corresponding control and/or setting of radiation sources (42) associated with different illumination radiation paths (46).

14. An apparatus in accordance with claim 13,
**characterized in that** the light structure is generated at least in part by a diaphragm and/or by markings, in particular linear markings, which are applied to a transparent cover provided at the end face (54) of the illumination device (32) facing the slicing region (20) or are introduced into such a transparent cover.

## Revendications

1. Dispositif (10) pour découper des produits alimentaires (12), en particulier trancheuse à haute performance,
comprenant une amenée de produits (16) qui définit un plan d'amenée et au moyen de laquelle les produits (12) sont amenés le long du plan d'amenée (14) dans une direction d'amenée (18) à un plan de coupe (22) situé dans une zone de découpe (20), plan dans lequel se déplace un couteau de coupe (24), en particulier en rotation et/ou en révolution, ledit couteau coopérant avec une arête de coupe (26) qui s'étend en particulier parallèlement au plan d'amenée (14) et perpendiculairement à la direction d'amenée (18) afin de séparer des tranches vis-à-vis des produits (12),
comprenant un dispositif de détection (30) pour un rayonnement réfléchi hors de la zone de découpe (20) et un dispositif d'évaluation (32) pour évaluer le rayonnement détecté, et
comprenant un dispositif d'éclairage (34) pour éclairer la zone de découpe (20), qui est agencé dans le demi-espace (38) situé devant la zone de découpe (20) et au-dessus du plan d'amenée (14), et qui comprend au moins une source de rayonnement (42) ainsi qu'un agencement de masquage (44) associé à celle-ci,
**caractérisé en ce que** le dispositif d'éclairage (34) est agencé afin d'éclairer au moins sensiblement de manière frontale la face frontale du produit (37), et **en ce que** l'agencement de masquage (44) comprend, afin de former une pluralité de trajets de rayonnement d'éclairage (46) allongés séparés les uns des autres sur le plan optique, s'étendant respectivement en direction de la zone de découpe (25) et agencés au voisinage les uns des autres, une pluralité de puits de lumière ou une pluralité d'éléments constitués d'un matériau conducteur de lumière et/ou transparent à la lumière.

2. Dispositif selon la revendication 1,
**caractérisé en ce que** l'agencement de masquage (44) définit au moins une rangée de trajets de rayonnement d'éclairage (46) qui se suivent mutuellement dans une direction parallèle à l'arête de coupe (26) ou au plan de coupe (22).

3. Dispositif selon la revendication 1 ou 2,
**caractérisé en ce qu'**au moins une source de rayonnement (42) est associée à chaque trajet de rayonnement d'éclairage (46), et/ou **en ce que** plusieurs sources de rayonnement (42) sont respectivement associées à quelques-uns au moins des trajets du rayonnement d'éclairage (46).

4. Dispositif selon l'une des revendications précédentes,
**caractérisé en ce que** l'agencement de masquage (44) est réalisé sous la forme d'une structure en avant de la source de rayonnement (42) qui s'étend depuis la source de rayonnement (42) en direction de la zone de découpe (20).

5. Dispositif selon l'une des revendications précédentes,
**caractérisé en ce que** l'agencement de masquage (44) inclut des parois de séparation (48) qui ne laissent pas passer la lumière, en particulier semblables à des lamelles, et les trajets du rayonnement d'éclairage (46) sont séparés optiquement les uns des autres par ces parois de séparation (48).

6. Dispositif selon la revendication 5,
**caractérisé en ce que** l'agencement de masquage (44) inclut au moins une barrette transversale qui coiffe les parois de séparation (48) sur le côté de la bordure et au moyen de laquelle les parois de séparation (48) sont fixées relativement les unes par rapport aux autres à une distance définie, et en particulier la barrette transversale et/ou les parois de séparation (48) est/sont dotée(s) de fentes, au moyen desquelles la barrette transversale et les parois de séparation (48) peuvent être emboîtées ensemble.

7. Dispositif selon la revendication 5,
**caractérisé en ce que** l'agencement de masquage (44) inclut au moins un organe de liaison, en particulier un câble passé dans des traversées du côté de la bordure des parois de séparation (48) ou une barre qui traverse les parois de séparation (48) du côté de la bordure, sur lequel/laquelle des éléments de maintien d'écartement susceptibles d'être mis en place entre les parois de séparation (48) sont enfilés ou placés en rangée.

8. Dispositif selon la revendication 5,
**caractérisé en ce que** les parois de séparation (48) de l'agencement de masquage (44) sont dotées d'éléments de maintien d'écartement conformés, au moyen desquels les parois de séparation (48) sont maintenues à une distance définie les unes par rapport aux autres.

9. Dispositif selon l'une des revendications 1 à 4,
**caractérisé en ce que** les trajets de rayonnement d'éclairage (46) sont formés par une pluralité d'éléments disposés en rangée les uns contre les autres, en particulier en forme de plaques, en un matériau qui conduit la lumière et/ou un matériau qui laisse passer la lumière, lesdits éléments étant fixés mécaniquement les uns contre les autres et séparés les uns des autres sur le plan optique par au moins un revêtement qui ne laisse pas passer la lumière.

10. Dispositif selon l'une des revendications précédentes,
**caractérisé en ce que** les sources de rayonnement (42) incluent respectivement au moins une diode électroluminescente et/ou **en ce qu'**il est prévu une ou plusieurs bandes mutuellement parallèles (50, 52) constituées respectivement de plusieurs sources de rayonnement (42) qui se suivent mutuellement dans une direction parallèle à l'arête de coupe (26) ou à au plan de coupe (22), en particulier des diodes électroluminescentes, et une ou plusieurs sources de rayonnement (42) ou respectivement une ou plusieurs diodes électroluminescentes sont associées en alternance aux trajets d'éclairage (46).

11. Dispositif selon l'une des revendications précédentes,
**caractérisé en ce que** le dispositif d'éclairage (34) est réalisé sous forme d'un bloc unitaire, qui est doté d'un recouvrement transparent (56) sur son côté frontal (54) tourné vers la zone de découpe (20).

12. Dispositif selon l'une des revendications précédentes,
**caractérisé en ce que** des sources de rayonnement (42) associées à différents trajets de rayonnement d'éclairage (46) sont susceptibles d'être pilotées individuellement et/ou réglables de manière individuellement variable, en particulier au moins pour ce qui concerne les propriétés de leur lumière et/ou leurs intensités d'éclairage.

13. Dispositif selon l'une des revendications précédentes,
**caractérisé en ce qu'**au moyen du dispositif d'éclairage (34) il est possible d'engendrer une structure lumineuse, en particulier un motif à bandes, sur la face frontale du produit (36) qu'il s'agit d'éclairer, et en particulier la structure lumineuse peut être engendrée au moins partiellement par un pilotage et/ou un réglage correspondant de sources de rayonnement (42) associées à différents trajets de rayonnement d'éclairage (46).

14. Dispositif selon la revendication 13,
**caractérisé en ce que** la structure lumineuse est engendrée au moins partiellement par un masque et/ou par plusieurs marquages, en particulier sous forme de lignes, qui sont appliqués sur un recouvrement transparent prévu sur une face frontale (54), tournée vers la zone de découpe (24), du dispositif d'éclairage (32), ou bien sont introduits dans un tel recouvrement transparent.
